# EUROPÄISCHE PATENTSCHRIFT

(11) **EP 0 378 994 B1**
(45) Veröffentlichungstag und Bekanntmachung des Hinweises auf die Patenterteilung: **11.08.1993**
(21) Anmeldenummer: 90100108.1
(22) Anmeldetag: 04.01.1990
(51) Int. Cl.: C02F 1/78

(54) **Verfahren zur Reinigung von Nitroaromaten enthaltenden Abwässern**
Process for the purification of waste waters containing aromatic nitro compounds
Procédé pour la purification d'eaux usées contenant des aromates nitrés

(30) Priorität: 14.01.1989 DE 3900932
(43) Veröffentlichungstag der Anmeldung: 25.07.1990
(73) Patentinhaber: BASF Aktiengesellschaft, 67063 Ludwigshafen (DE)
(72) Erfinder: Schuster, Ludwig, Dr., D-6703 Limbergerhof (DE); Stechl, Hanns-Helge, Dr., D-6800 Mannheim 1 (DE); Wolff, Dietrich, Dr., D-6831 Plankstadt (DE)

(56) Entgegenhaltungen:
- CHEMIE-INGENIEUR-TECHNIK, Band 46, Nr. 8, April 1974, Seite 339; W. GRÜNBEIN: "Ozonisierung von Abwasser"
- CHEMICAL ABSTRACTS, Band 102, Nr. 20, 20. Mai 1985, Seite 341, Zusammenfassung Nr. 172028f, Columbus, Ohio, US; V. CAPRIO et al.: "Ozonation of aqueous solutions of nitrobenzene"
- CHEMICAL ABSTRACTS, Band 108, Nr. 4, 25. Januar 1988, Seite 316, Zusammenfassung Nr. 26755y, Columbus, Ohio, US; V.F. VAKULENKO et al.: "Intensification of the ozonization of phenolic nitro derivatives in aqueous solutions"
- CHEMICAL ABSTRACTS, Band 102, Nr. 26, 1. Juli 1985, Seite 324, Zusammenfassung Nr. 225752w, Columbus, Ohio, US; W.J. MASSCHELEIN: "Nitrophenols as model compounds in the design of zone contacting and reacting system"
- CHEMICAL ABSTRACTS, Band 102, Nr. 18, 6. Mai 1985, Seite 317, Zusammenfassung Nr. 154316u, Columbus, Ohio, US; E. SÜRDE et al.: "Purification of wastewater"
- E. Gilbert, Water res., 21 (10) 1273-86. Mai 1985, Seite 317, Zusammenfassung Nr. 154316u, Columbus, Ohio, US; E. SÜRDE et al.: "Purification of wastewater"

## Beschreibung

Die Erfindung betrifft die Ozonbehandlung von Abwässern der Herstellung von Nitrobenzol aus Benzol und Nitriersäure.

Sehr zahlreiche literaturbekannte Untersuchungen haben den Abbau organischer Verbindungen durch Ozon zum Gegenstand. Dabei handelt es sich hauptsächlich um Arbeiten, die die Kinetik und die Spaltprodukte abzuklären versuchen.

Eine große Anzahl von Veröffentlichungen hat ferner die Reinigung von Trink- und Brauchwasser zum Gegenstand. Das Ziel ist hier meist die Abtötung von Erregern, seien es Viren, Bakterien oder andere Einzeller.

Ein anderes, umfangreiches Gebiet umschließt die Behandlung von industriell verschmutztem Abwasser. Hierbei wird die Behandlung mit Ozon vor allem dann eingesetzt, wenn die Wässer biologisch nicht oder nur schwer abbaubare Bestandteile enthalten. Diese Methode der vorherigen Teilozonolyse baut also organische Verbindungen zu einem für Bakterien angreifbaren Zustand ab (E. Gilbert, Water Res., 21 (10) 1273-8; D.R. Medley, J. Water Pollut. Control Fed., 55 (5) 489-94).

Enthalten nun die Abwässer Nitrophenole, so wird die kombinierte Anwendung verschiedener Reinigungsmethoden wie Koagulation, Sedimentation, Ozonisierung und Adsorption an Aktivkohle empfohlen (M.A. Shevchenko, Khim., Tekhnol. Vody, 8 (6), 7 - 10).

Es wurde nun überraschenderweise gefunden, daß man Abwässer der Nitrobenzolherstellung durch Nitrierung von Benzol, die verschiedene aromatische Verbindungen, in der Hauptsache jedoch 2,4-Dinitrophenol, enthalten, allein durch die Behandlung mit Ozon bei Temperaturen von 20 bis 100°C, vorzugsweise 20 bis 60°C bei einem Druck (absolut) von 1,5 bis 10 bar, vorzugsweise 1,5 bis 5 bar und einem pH-Wert von 3 bis 12, im wesentlichen bei 7 bis 9, soweit reinigen kann, daß die Gehalte der ursprünglichen Verunreinigungen unter deren Nachweisgrenzen zu liegen kommt.

Der pH-Wert der zu oxidierenden Lösung beträgt zu Beginn der Oxidation in der Regel pH 12, der im Laufe der Ozonisierung abfällt. Jedoch soll der pH-Wert nicht unter pH 4,5 fallen, solange noch wesentliche Mengen nicht abgebauten Dinitrophenols zugegen sind, da sonst eine Ausfällung des Dinitrophenols eintritt. Der bevorzugte pH-Wert-Bereich ist pH 7 bis 9.

Der Reaktionsdruck wird zweckmäßiger Weise auf 1,5 bis 10, vorzugsweise 1,8 bis 5 bar eingestellt. Wegen der erhöhten Reaktionstemperatur ist die Löslichkeit des Ozons nämlich sehr gering bis verschwindend klein. Es empfiehlt sich daher, wenigstens eine gewisse Erhöhung der Löslichkeit anzustreben. Ferner nimmt die Ozonausbeute der Ozongeneratoren bei erhöhtem Druck zu. Es ist daher zweckmäßig, diesen Druck auch im Reaktor aufrecht zu halten. Der Druck ist jedoch aus apparativen Gründen meist auf einen oberen Wert von 10 bar beschränkt.

Die Verteilung des ozonhaltigen Gases muß zweckmäßigerweise sehr fein sein und intensiv erfolgen, um die geringe Löslichkeit des Ozons auszugleichen. Jede beliebige Form der Gasfeinverteilung ist hierbei möglich, z.B. mit Hilfe von fein dispergierenden Rührern oder von Ultraschall oder mit Hilfe von Gasfritten oder üblichen Injektoren.

Zur kontinuierlichen Ausgestaltung des Verfahrens benützt man vorzugsweise eine Kaskade von Reaktoren, die im Gegenstrom geschaltet sind. Auf diese Weise wird das Ozon so vollständig aus dem Gasstrom entfernt, daß man meist auf eine Restozonvernichtung verzichten kann.

Der Ozongehalt im Frischgas soll wegen der geringen Löslichkeit in Wasser bei erhöhter Temperatur möglichst hoch gehalten werden. Als technisch noch leicht herstellbar haben sich Gehalte von 40 bis 100 g Ozon pro Kubikmeter Frischgas erwiesen. Durch die Anwendung spezieller Anreicherungsmethoden, wie beispielsweise eines Adsorptions-Desorptionsverfahrens, können auch noch höhere Ozonkonzentrationen erreicht werden.

Mit dem erfindungsgemäßen Verfahren werden vor allem die Abwässer einer Nitrobenzolherstellung gereinigt. Da man jedoch auch Nitrobenzol zur Extraktion von Restmengen Anilin im Abwasser der Anilinerzeugung aus Nitrobenzol verwendet und die so entstehenden Abwässer zusammen der Ozonbehandlung unterwerfen kann, ist im behandlungsbedürftigen Wasser gegebenenfalls auch Anilin enthalten, das ebenfalls durch Ozon abgebaut wird.

### Beispiel 1

In einem druckfesten Gefäß von 2,5 l Inhalt, das mit einem schnellaufenden Rührer aus Edelstahl versehen war, wurden 1,5 l eines Abwassers der Nitrobenzolherstellung vorgelegt, das 0,5 ppm Benzol, 10 ppm Nitrobenzol, 5 ppm Anilin, 2800 ppm Natrium-2,4-dinitrophenolat und 65 ppm Natriumpikrat enthielt. Daneben waren noch geringfügige Mengen anorganischer Salze wie Natriumnitrat zugegen. Nach dem Ansäuern bis zu einem pH von 5 wurde auf 87°C erwärmt und unter intensivem Rühren unter einem Druck von 2,2 bar 120 Normalliter pro Stunde Ozon enthaltenden Sauerstoff eingeleitet, entsprechend 7,2 g O₃/Stunde. Im Verlauf von zwei Stunden stieg der Ozongehalt des Abgases von 5 g/m³ auf ca. 50 g/m³ an. Der pH fiel im Verlauf der Reaktion kontinuierlich bis auf pH 3 ab.

Die vorher darin enthaltenen organischen Bestandteile wurden praktisch völlig zerstört; die Mengen lagen unter der Nachweisgrenze.

Die Analysen erfolgten durch HPLC nach vorheriger extraktiver Aufkonzentrierung.

### Ergebnisse

- Benzol: <30 ppb
- Nitrobenzol: <20 ppb
- Anilin: <20 ppb
- Natriumdinitrophenolat: <10 ppb
- Natriumpikrat: <10 ppb

Der Gesamtkohlenstoffgehalt fiel von 0,11 % auf <0,01 %;

Der Gesamtstickstoffgehalt nahm von 0,052 % auf 0,02 % ab.

### Beispiel 2

In einem Gefäß von 2,5 l Inhalt, das mit einem schnellaufenden Rührer aus Edelstahl versehen war, wurden 2 l eines Abwassers der Nitrobenzolherstellung vorgelegt, das 0,5 ppm Benzol, 10 ppm Nitrobenzol, 5 ppm Anilin, 2800 ppm Natrium-2,4-dinitrophenolat und 65 ppm Natriumpikrat enthielt. Daneben waren noch geringfügige Mengen anorganischer Salze wie Natriumnitrat zugegen. Bei einer Temperatur von 40°C wurden unter intensivem Rühren 120 l pro Stunde Sauerstoff eingeleitet, der 180 g Ozon pro Kubikmeter enthielt. Dies entspricht 21,6 g Ozon pro Stunde. Nach 35 min waren keine aromatischen Verbindungen mehr nachzuweisen. Nach 50 min war der TOC-Wert auf 4 mg/l abgesunken.

## Patentansprüche

1. Verfahren zum Abbau von aromatischen Nitroverbindungen in Abwässern von Anlagen zur Herstellung von Nitrobenzol durch Behandlung mit Ozon, dadurch gekennzeichnet, daß man die Ozonbehandlung bei 20 bis 100°C, einem Druck von 1,5 bis 10 bar und einem pH-Wert von 3 bis 12 durchführt.

2. Verfahren gemäß Anspruch 1, dadurch gekennzeichnet, daß man die Ozonisierung bei 20 bis 60°C, 1,5 bis 5 bar und im wesentlichen im Bereich von pH 7 bis 9 durchführt.

## Claims

1. A process for breaking down aromatic nitro compounds in waste water from plants for the preparation of nitrobenzene by treatment with ozone, which comprises carrying out the ozone treatment at from 20 to 100°C, under a pressure of from 1.5 to 10 bar and at a pH of from 3 to 12.

2. A process as claimed in claim 1, wherein the ozonization is carried out at from 20 to 60°C, under from 1.5 to 5 bar and essentially in the range from pH 7 to 9.

## Revendications

1. Procédé de dégradation de composés aromatiques nitrés dans les eaux usées d'installations de préparation de nitrobenzène par traitement par l'ozone, caractérisé en ce qu'on conduit le traitement par l'ozone à une température de 20 à 100°C, sous une pression de 1,5 à 10 bar et à un pH de 3 à 12.

2. Procédé selon la revendication 1, caractérisé en ce qu'on effectue l'ozonisation à une température de 20 à 60°C, sous une pression de 1,5 à 5 bar et à un pH compris essentiellement dans la gamme de 7 à 9.
